# EUROPEAN PATENT APPLICATION

(11) **EP 4 592 747 A1**
(43) Date of publication of application: **30.07.2025**
(21) Application number: 23868661.2
(22) Date of filing: 22.09.2023
(51) Int. Cl.: G03B 17/55, G03B 17/12, G03B 30/00, H04N 23/55, H04N 23/54, H04N 23/57, B60R 11/04

(54) **CAMERA FOR VEHICLE, AND VEHICLE**

(30) Priority: 23.09.2022 KR 20220121097; 23.09.2022 KR 20220121098
(71) Applicant: LG INNOTEK CO. LTD, Gangseo-gu Seoul 07796 (KR)
(72) Inventor: HAN, Sang Yeal, Seoul 07796 (KR)
(74) Representative: DREISS Patentanwälte PartG mbB
(86) International application number: PCT/KR2023/014542
(87) International publication number: WO 2024/063609

(57) **Abstract**

This camera module comprises: a lens barrel; a lens disposed in the lens barrel; a heating member including a heating unit disposed on the surface of the lens; and a sensor member including a sensor unit disposed on the bottom surface of the heating unit, wherein the lens includes a groove to which the heating unit and the sensor unit are coupled.

## Description

### [Technical Field]

THE PRESENT EMBODIMENT RELATES TO A VEHICLE CAMERA AND A VEHICLE.

### [Background Art]

Recently, ultra-small camera modules have been developed and are widely used in small electronic products such as smartphones, laptops, and game consoles.

As automobiles become more popular, ultra-small cameras are widely used in vehicles as well as in small electronic products. For example, black box cameras for vehicle protection or objective data on traffic accidents, rear surveillance cameras that allow drivers to monitor the blind spots at the rear of the vehicle through a screen to ensure safety when reversing, and surrounding detection cameras that can monitor the surroundings of the vehicle are provided.

The camera may be equipped with a lens, a lens holder that accommodates the lens, an image sensor that converts an image of a subject collected in the lens into an electrical signal, and a printed circuit board on which the image sensor is mounted. The housing forming the outer appearance of the camera is formed with a structure in which the entire area is sealed to prevent internal components from being contaminated by foreign substances containing moisture.

In the case of a camera module, since it is disposed outside the vehicle and is greatly affected by outside air, frost, condensation, and freezing frequently occur in the lens in winter. When frost, condensation, and freezing occur in the lens, there is a problem in that the performance of the camera module is greatly deteriorated.

### [Detailed Description of the Invention]

### [Technical Subject]

The present embodiment is intended to provide a camera module and a vehicle capable of quickly removing frost or ice generated on the surface of a lens through a heating function.

### [Technical Solution]

A camera module according to the present embodiment comprises: a lens barrel; a lens being disposed inside the lens barrel; a heating member including a heating unit being disposed on a surface of the lens; and a sensor member including a sensor unit being disposed on a lower surface of the heating unit, wherein the lens includes a groove to which the heating unit and the sensor unit are coupled.

The heating unit may be a positive temperature coefficient (PTC) ink being applied to the surface of the lens.

The heating unit may have a black color.

Each of the heating unit and the sensor unit may have a ring-shaped cross-section.

A temperature sensor may be disposed on a lower surface of the sensor unit.

The heating unit and the sensor unit may be interposed between an upper surface of the lens barrel and a lower surface of the lens.

A rib being protruded downward may be disposed on a lower surface of the sensor unit

The heating member includes a first connecting portion having one end connected to the heating unit and the other end connected to a printed circuit board, and the sensor member includes a second connecting portion having one end connected to the sensor unit and the other end connected to the printed circuit board, and the first connecting portion and the second connecting portion can be disposed to be overlapped with at least a portion thereof.

The first connecting portion and the second connecting portion may be flexible printed circuit boards (FPCBs).

According to another embodiment, a camera module comprises: a first body; a lens module being disposed inside the first body, the lens module including a lens barrel and a lens being disposed inside the lens barrel; a printed circuit board being disposed inside the first body; and a heating member providing heat to the lens, wherein the heating member may include a heating unit being disposed on a surface of the lens, and a substrate electrically connecting the heating unit and the printed circuit board.

### [Advantageous Effects]

Through the present embodiment, since the surface of the lens is heated based on information detected by the temperature sensor, not only can frost or ice being formed on a surface of the lens can be efficiently removed, but there is also an advantage in that power can be efficiently managed.

### [Brief Description of Drawings]

FIG. 1 is a perspective view of a vehicle according to an embodiment of the present invention.
FIG. 2 is a perspective view illustrating the outer appearance of a camera module according to a first embodiment of the present invention.
FIG. 3 is a cross-sectional view of a camera module according to a first embodiment of the present invention.
FIG. 4 is a perspective view of a lens barrel according to a first embodiment of the present invention.
FIG. 5 is a cross-sectional view illustrating a coupling structure of a first lens, a heating member, and a sensor member according to a first embodiment of the present invention.
FIG. 6 is an exploded perspective view of a first lens, a heating member, and a sensor member according to a first embodiment of the present invention.
FIG. 7 is a perspective view illustrating a coupling structure of a first lens, a heating member, and a sensor member according to a first embodiment of the present invention.
FIG. 8 is a cross-sectional view of a camera module according to a second embodiment of the present invention.
FIG. 9 is a cross-sectional view of a lens heat generation structure according to a second embodiment of the present invention.
FIG. 10 is a plan view of a substrate according to a second embodiment of the present invention.
FIG. 11 is a cross-sectional view of a lens heat generation structure according to a third embodiment of the present invention.
FIG. 12 is a perspective view of a camera module according to a fourth embodiment of the present invention.
FIG. 13 is a cross-sectional view of a camera module according to a fourth embodiment of the present invention.
FIG. 14 is a cross-sectional view of a first lens according to a fourth embodiment of the present invention.
FIG. 15 is a perspective view of a lens barrel according to a fourth embodiment of the present invention.

### [BEST MODE]

Hereinafter, preferred embodiments of the present invention will be described in detail with reference to the accompanying drawings.

However, the technical idea of the present invention is not limited to some embodiments to be described, but may be implemented in various forms, and inside the scope of the technical idea of the present invention, one or more of the constituent elements may be selectively combined or substituted between embodiments.

In addition, the terms (including technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may include the plural form unless specifically stated in the phrase, and when described as "at least one (or more than one) of A and B and C", it may include one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also include cases of being 'connected', 'coupled', or 'interconnected' due that another component between that other components.

In addition, when described as being formed or disposed in "on (above)" or "below (under)" of each component, "on (above)" or "below (under)" means that it includes not only the case where the two components are directly in contact with, but also the case where one or more other components are formed or disposed between the two components. In addition, when expressed as "on (above)" or "below (under)", the meaning of not only an upward direction but also a downward direction with respect to one component may be included.

The 'optical axis direction' used hereinafter is defined as the optical axis direction of the lens. Meanwhile, the 'optical axis direction' may correspond to 'up-down direction', 'z-axis direction', and the like.

Hereinafter, the present invention will be described in more detail with reference to the attached drawings.

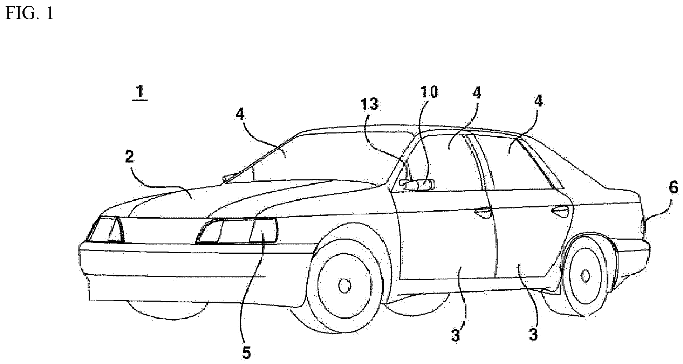

FIG. 1 is a perspective view of a vehicle according to an embodiment of the present invention.

Referring to FIG. 1, a vehicle **1** according to an embodiment of the present invention may include a body **2,** a door **3,** glass **4,** a headlamp **5,** a tail lamp **6,** and a camera module **10.**

The body **2** may be an exterior member of the vehicle **1.** The body **2** may have various forms, such as a frame type and a monocoque type. One or more doors **3** may be coupled to a side surface of the body **2.** In addition, the glass **4** may be coupled to the front and rear a portion where a pillar is formed of the upper portion of the body **2** and the door **3.** The headlamp **5** may be mounted on the front of the lower portion of the body **2.** The tail lamp **6** may be mounted on the rear of the lower portion of the body **2.**

A camera module **10** may be installed on a side portion of the body **2** or on a door being disposed at the front of one or more of the doors **3.** The camera module **10** may be installed in front of the glass **4** coupled to the door **3.** That is, a side mirror in the vehicle **1** of the present embodiment may be redisposed with the camera module **10.**

The above camera module **10** can photograph images of both rear sides of the vehicle. Images photographed by the camera module **10** can be electrically connected to a display unit (not shown) through an electronic control unit (ECU), and the like. Accordingly, images photographed by the camera module **10** can be controlled by the electronic control unit (ECU) and played back on the display unit.

An interior space for a driver can be formed inside the body **2.** A display unit can be installed inside the body **2.** The display unit can output an image photographed by the camera module **10.** The display unit can be installed on a dashboard (not shown) inside the body **2.**

The installation form of the camera module **10** inside the vehicle **1** described above is exemplary, and the camera module **10** can be used in one or more among a front camera, a side camera, a rear camera, and a black box of the vehicle **1.**

Hereinafter, a camera module according to a first embodiment is described with reference to the drawings.

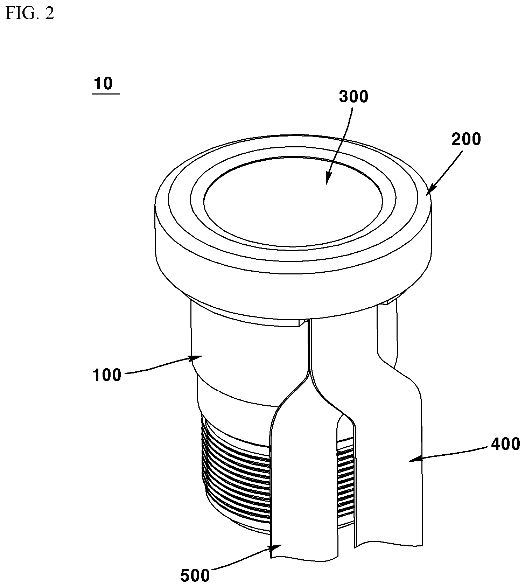

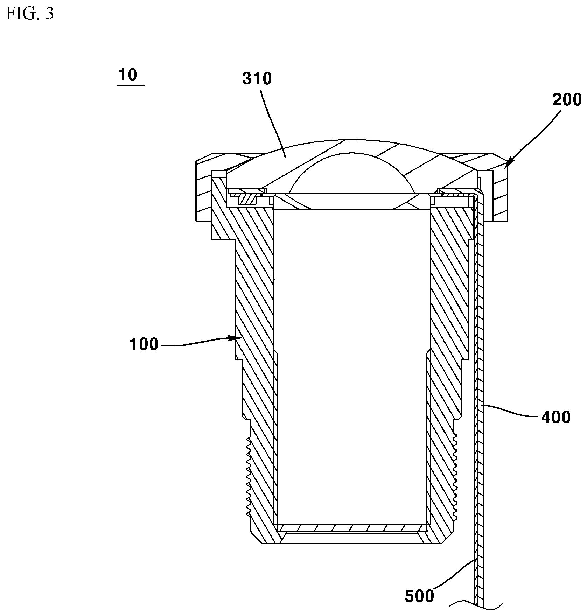

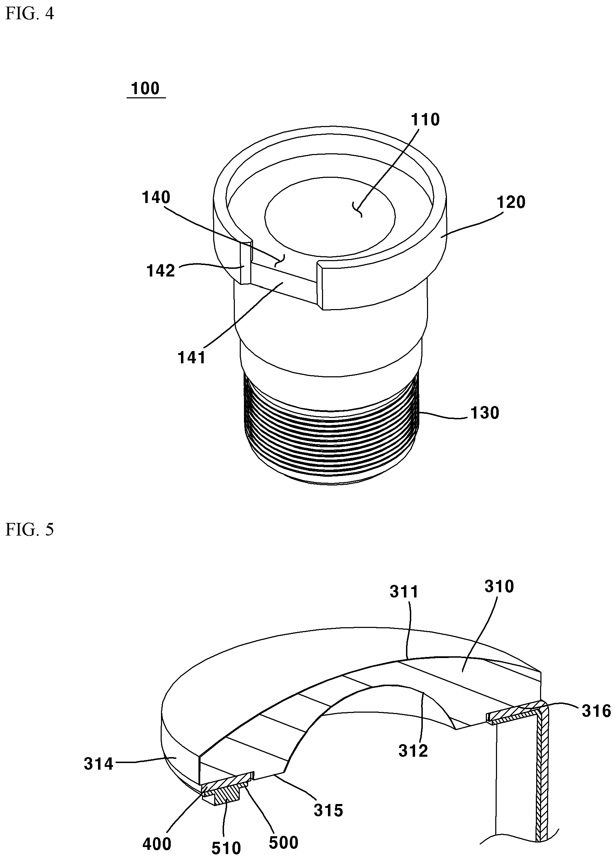

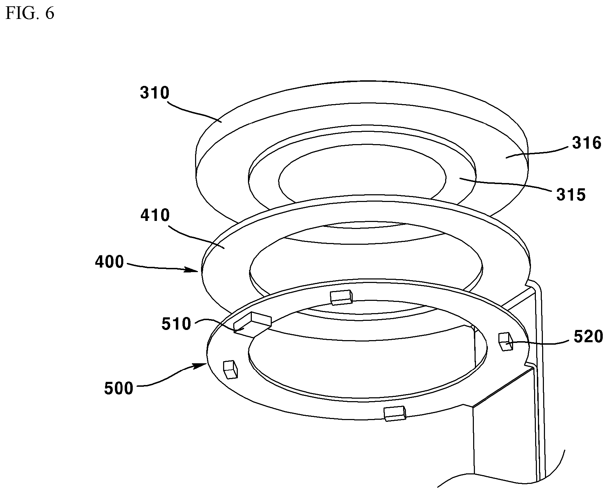

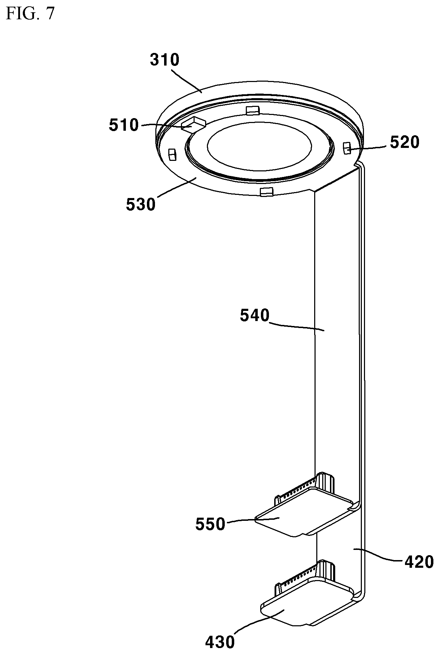

FIG. 2 is a perspective view illustrating the outer appearance of a camera module according to a first embodiment of the present invention; FIG. 3 is a cross-sectional view of a camera module according to a first embodiment of the present invention; FIG. 4 is a perspective view of a lens barrel according to a first embodiment of the present invention; FIG. 5 is a cross-sectional view illustrating a coupling structure of a first lens, a heating member, and a sensor member according to a first embodiment of the present invention; FIG. 6 is an exploded perspective view of a first lens, a heating member, and a sensor member according to a first embodiment of the present invention; and FIG. 7 is a perspective view illustrating a coupling structure of a first lens, a heating member, and a sensor member according to a first embodiment of the present invention.

Referring to FIGS. 2 to 7, a camera module **10** according to a first embodiment of the present invention may include a lens barrel **100,** a retainer **200,** a lens **300,** a heating member **400,** and a sensor member **500.**

The lens barrel **100** may be formed in a cylindrical shape with the upper and lower surfaces open. A space **110** in which the lens **300** is disposed may be formed inside the lens barrel **100.** The space **110** of the lens barrel **100** may include a plurality of regions with different cross-sectional areas. For example, the region in which a first lens **310** to be described later is disposed among the spaces inside the lens barrel **100** may be formed to have a larger cross-sectional area than other regions.

The camera module **10** may include a body (not shown) that forms the outer appearance of the camera module **10** and has the lens barrel **100** disposed therein. The body may include a front body and a rear body. A hole into which the lens barrel **100** is coupled is formed in the front of the front body, and at least a portion of the lens barrel **100** may be disposed to be protruded from the outer surface of the front body.

A screw coupling portion **130** for coupling with the front body or other components inside the front body may be formed on the outer circumferential surface of the lens barrel **100.**

The lens barrel **100** may include a plurality of regions having different cross-sectional areas. For example, the lens barrel **100** may include a first region and a second region being disposed at a lower portion of the first region. The cross-sectional area of the first region may be formed to be larger than the cross-sectional area of the second region. The retainer **200** may be disposed on the outside of the first region. The retainer **200** may be coupled to the outer surface of the lens barrel **100** through an adhesive or may be screw-coupled through screw threads.

A protruded portion **120** being protruded upwardly and supporting a side surface of a first lens **310** to be described later may be formed on the upper surface of the lens barrel **100.** A portion of the side surface of the first lens **310** may be covered by the protruded portion **120.** The inner surface of the protruded portion **120** may come into contact with the side surface of the first lens **310.**

An avoidance portion **140** may be formed on the side surface of the lens barrel **100.** The avoidance portion **140** may have a groove shape being recessed inward more than other regions. The avoidance portion **140** may be formed on the side surface of the first region where the outermost lens **310** is disposed. The avoidance portion **140** may have a shape that is obtained by cutting the formation region of the protruded portion **120** by a predetermined distance in a circumferential direction. When viewed from the side surface, the avoidance portion **140** may have a hole shape that penetrates a portion of the protruded portion **120** in a direction perpendicular to the optical axis direction. The side of the first region corresponding to the formation region of the avoidance portion **140** may be flat. At least a portion of the heating member **400** and the sensor member **500** may be disposed on the avoidance portion **140.** The above avoidance portion **140** may include a bottom surface **141** and a plurality of guide surfaces **142** being disposed on both sides of the bottom surface **141.** The guide surfaces **142** may be disposed to form an obtuse angle with the bottom surface **141.**

The lens **300** may be disposed inside the lens barrel **100.** The lenses **300** may be provided in multiple numbers and may be disposed spaced apart from each other based on the optical axis direction. The lens **300** may include a first lens **310** and a second lens being disposed at a lower portion of the first lens **310.** The first lens **310** and the second lens may be spaced apart from each other. In the space **110** inside the lens barrel **100,** the cross-sectional areas of the regions where the first lens **310** and the second lens are disposed may be different. The first lens **310** may be referred to as an outermost lens. The first lens **310** may be formed to have a larger cross-sectional area than other lenses. The incident surface of the first lens **310** may be protruded upwards more than the upper surface of the lens barrel **100** or the upper surface of the retainer **200.**

The first lens **310** may include an incident surface **311** through which light is incident, an exit surface **312** through which the incident light is emitted, and a connecting surface connecting the incident surface **311** and the exit surface **312.** The connecting surface may include a first connecting surface **314** and a second connecting surface **315.** The first connecting surface **314** may form a side surface of the first lens **310.** The second connecting surface **315** may form a lower surface of the first lens **310.** A groove **316** having a shape being recessed upward more than other regions may be formed on the lower surface of the first lens **310.** The bottom surface of the groove **316** may be disposed with a step in an optical axis direction from the second connecting surface **315.** The bottom surface of the groove **316** can be disposed higher than the second connecting surface **315.**

The groove **316** may have a ring-shaped cross section.

The retainer **200** may be coupled to an outer surface of the lens barrel **100.** The retainer **200** may be coupled to an upper end of the lens barrel **100.** At least a portion of the retainer **200** may be disposed inside the front body.

The retainer **200** may have a ring-shaped cross section. At least a portion of the retainer **200** may be disposed to cover an edge of the incident surface **311** of the first lens **310.** The retainer **200** may be disposed to surround an edge of the first lens **310.** The retainer 200 may be in contact with a portion of the incident surface of the first lens **310.**

The heating member **400** may be a positive temperature coefficient heater (PTC).

The heating member **400** may be disposed outside the lens barrel **100.** The heating member 400 may have one end being disposed on a surface of the first lens **310** and the other end being coupled to the printed circuit board. The printed circuit board may be disposed inside the body of the camera module **10.**

The heating member **400** may include a heating unit **410,** a first connecting portion **420,** and a first terminal portion **430.**

The heating unit **410** may be disposed between an upper surface of the lens barrel **100** and a lower surface of the first lens **310.** The heating unit **410** may be disposed in the groove **316.** The heating unit **410** may have a cross-sectional shape of a ring shape. An adhesive or an adhesive tape may be disposed between the heating unit **410** and the groove **316.**

The heating unit **410** may generate heat. The heating unit **410** may include a positive temperature coefficient (PTC) material, and may be manufactured in the form of a semiconductor device. The heating unit **410** may include a PTC device, an electrode plate, and an insulating plate. The heating unit **410** may include a heating ink applied to a sheet on which a circuit pattern is formed.

Frost, ice, and the like generated on the surface of the first lens **310** can be removed through the heat generated from the heating unit **410.**

The heating unit **410** may be black.

The first terminal portion **430** can be coupled with the printed circuit board. A connector being electrically and physically coupled with the first terminal portion **430** can be disposed on the surface of the printed circuit board.

The first connecting portion **420** may be disposed to connect the first terminal portion **430** and the heating unit **410.** The first connecting portion **420** may be a flexible printed circuit board (FPCB). The first connecting portion **420** may include a circuit pattern. The first connecting portion **420** may have a region that is bent at least once. The first connecting portion **420** may be disposed on an outside of the lens barrel **100.** At least a portion of the first connecting portion **420** may be disposed on the avoidance portion **140.** The first connecting portion **420** may be coupled to a side surface of the lens barrel **100** by the bottom surface **141** and the guide surface **142.**

The sensor member **500** may be disposed at an inner side of the heating member **400.** The sensor member **500** may be disposed so that at least a portion is overlapped with the heating member **400.** The sensor member **500** may be disposed so that at least a portion is overlapped with the heating member **400** in a direction perpendicular to the optical axis direction. At least a portion of the sensor member **500** may be coupled to the avoidance portion **140.** The sensor member **500** and the heating member **400** may be disposed so as to be overlapped with the avoidance portion **140.**

At least a portion of the sensor member **500** and the above heating member **400** may be disposed so as not to be overlapped with each other.

The sensor member **500** may include a sensor unit **530,** a second connecting portion **540,** and a second terminal portion **550.**

The sensor unit **530** may be disposed between the upper surface of the lens barrel **100** and the lower surface of the first lens **310.** The sensor unit **530** may be disposed in the groove **316.** The sensor unit **530** may be disposed at a lower portion of the heating unit **410.** The upper surface of the sensor unit **530** and the lower surface of the heating unit **410** may be in contact. The sensor unit **530** may have a ring-shaped cross-section. An adhesive or adhesive tape may be disposed between the sensor unit **530** and the heating unit **410.**

A temperature sensor **510** may be disposed on a lower surface of the sensor unit **530.** The temperature sensor **510** may detect the temperature of the heating unit **410** or the first lens **310.** The temperature sensor **510** may be mounted on a lower surface of the sensor unit **530.** A circuit pattern (not shown) for electrical connection of the temperature sensor **510** may be formed in the sensor unit **530.**

A rib **520** may be formed on a lower surface of the sensor unit **530.** The rib **520** may have a shape being protruded downward from the lower surface of the sensor unit **530.** The strength of the sensor unit **530** may be reinforced through the rib **520.** The rib **520** may be in contact with an upper surface of the lens barrel **100.** The ribs **520** may be provided in multiple numbers and may be disposed to be spaced apart from each other with respect to a circumferential direction.

The second terminal portion **550** may be coupled with the printed circuit board. A connector being electrically and physically coupled with the second terminal portion **550** may be disposed on a surface of the printed circuit board. The printed circuit board being coupled with the first terminal portion **430** and the printed circuit board being coupled with the second terminal portion **550** may be different. Unlike this, the printed circuit board being coupled with the first terminal portion **430** and the printed circuit board being coupled with the second terminal portion **550** may be the same.

The second connecting portion **540** may be disposed to connect the second terminal portion **550** and the sensor **530.** The second connecting portion **540** may be a flexible printed circuit board (FPCB). The second connecting portion **540** may include a circuit pattern. The second connecting portion **540** may have a region that is folded at least once. The second connecting portion **540** may be disposed outside the lens barrel **100.** The second connecting portion **540** may be disposed inside the first connecting portion **420.** At least a portion of the second connecting portion **540** may be disposed in the avoidance portion **140.** The second connecting portion **540** can be connected to the side surface of the lens barrel **100** by the bottom surface **141** and the guide surface **142.**

According to the above structure, since the surface of the lens is heated based on information detected through the temperature sensor, not only can frost or ice occurring on the surface of the lens be efficiently removed, but there is also an advantage in that power can be efficiently managed.

Hereinafter, a camera module according to a second embodiment is described with reference to the drawings.

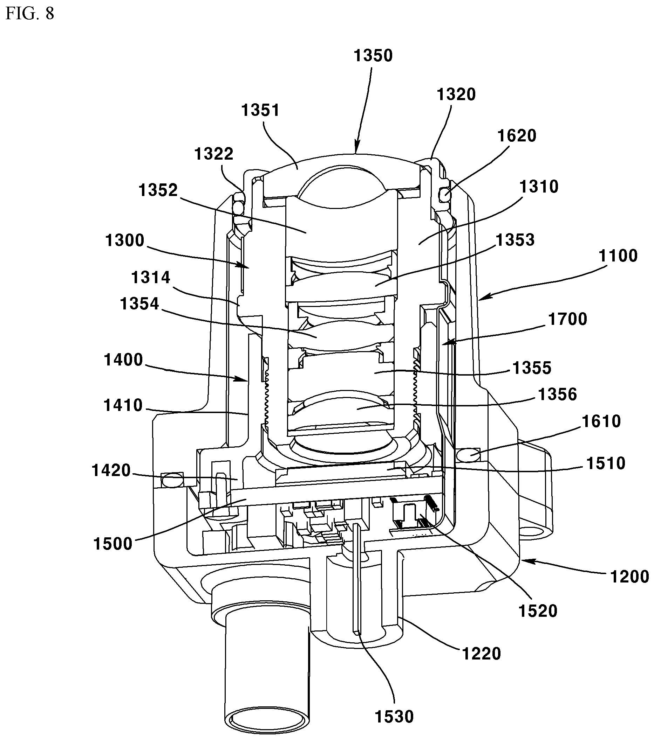

FIG. 8 is a cross-sectional view of a camera module according to a second embodiment of the present invention.

Referring to FIG. 8, a camera module according to an embodiment of the present invention may comprise a first body **1100,** a second body **1200,** a lens module **1300,** a lens holder **1400,** a printed circuit board **1500,** sealing members **1610** and **1620,** and a heating member **1700.**

The first body **1100** may form the outer appearance of the camera module. The first body **1100** may be referred to as any one among a front body, an upper housing, and a first housing. A space may be formed inside the first body **1100** so that the lens module **1300,** the lens holder **1400,** and the printed circuit board **1500** may be disposed.

The second body **1200** can form the outer appearance of the camera module by coupling with the first body **1100.** The second body **1200** can be named as any one among a rear body, a lower housing, and a second housing. The second body **1100** can be coupled with the lower surface of the first body **1100.** The second body **1200** can be coupled with the first body **1100** by any one of ultrasonic welding, laser welding, and thermal welding. Unlike this, the second body **1200** and the first body **1100** can be mutually coupled by epoxy. An internal space in which the printed circuit board **1500** is disposed can be formed inside the second body **1200.** The space inside the first body **1100** and the space inside the second body **1200** can be connected.

A connector withdrawal part **1220** may be formed on a lower surface of the second body **1200** being protruded downward than other regions. A space may be formed inside the connector withdrawal part **1220,** such that a pin **1530,** which will be described later, is disposed. An external connector is coupled to the connector withdrawal part **1220,** and the external connector may include a terminal (not shown) being electrically and physically coupled to the pin **1530.**

The lens module **1300** may be disposed inside the first body **1100.** At least a portion of the lens module **1300** may be protruded upward from the first body **1100.** The lens module **1300** may include a lens barrel **1310,** a lens **1350,** and a retainer **1320.**

The lens barrel **1310** may be disposed inside the first body **1100.** The lens barrel **1310** may be formed in a cylindrical shape with open upper and lower surfaces. A space in which the lens **1350** is disposed may be formed inside the lens barrel **1310.** The space of the lens barrel **1310** may include a plurality of regions having different cross-sectional areas. For example, a region of the lens barrel **1310** in which a first lens **1351** to be described later is disposed may have a larger cross-sectional area than other regions. At least a portion of the lens barrel **1310** may be disposed inside the lens holder **1400.** The lens barrel **1310** may be coupled to the lens holder **1400.** The lens barrel **1310** may be screw-coupled to the lens holder **1400.**

The lens barrel **1310** may include a plurality of regions having different cross-sectional areas. For example, the lens barrel **1310** may include a first region and a second region being disposed at a lower portion of the first region. A cross-sectional area of the first region may be larger than a cross-sectional area of the second region. The second region may be screw-coupled to the lens holder **1400.** A screw thread or a screw groove may be formed in an outer circumferential surface of the second region. The heating member **1700** may be disposed to surround a portion of the outer circumferential surface of the first region.

The lens barrel **1310** may include a protruded portion **1314.** The protruded portion **1314** may be disposed between the first region and the second region. The protruded portion **1314** may have a shape in which a portion of an outer circumferential surface of the lens barrel **1310** being protruded outward. The protruded portion **1314** may have a ring-shaped cross section.

The lens **1350** may be disposed inside the lens barrel **1310.** A plurality of lenses **1310** may be provided and disposed to be spaced apart from each other with respect to an optical axis direction. The plurality of lenses **1310** may include a first lens **1351,** a second lens **1352,** a third lens **1353,** a fourth lens **1354,** a fifth lens **1355,** and a sixth lens **1356.** The first to sixth lenses **1351, 1352, 1353, 1354, 1355,** and **1356** may be sequentially disposed with respect to an optical axis direction. The first lens **1351** may be referred to as an outermost lens. The first lens **1351** may have a cross-sectional area larger than that of other lenses. A spacer for spacing adjacent lenses may be disposed between the plurality of lenses.

The retainer **1320** may be coupled to an outer surface of the lens barrel **1310.** The retainer **1320** and the lens barrel **1310** may be coupled to each other through an epoxy. Unlike this, the retainer **1320** may be screw-coupled to the lens barrel **1310.** The retainer **1320** may be coupled to an upper end of the lens barrel **1310.** The retainer **1320** may be disposed inside the first body **1100.** The incident surface of the first lens **1351** may be protruded upward from an upper surface of the retainer **1320.**

The coupling structure between the lens barrel **1310** and the retainer **1320** described above is exemplary, and the camera module may be implemented in an integrated structure in which the lens barrel **1310** and the retainer **1320** are one body.

The retainer **1320** may have a ring-shaped cross section. At least a portion of the retainer **1320** may be disposed to cover an edge of the lens **1350.** The retainer **1320** may be disposed to surround an edge of the first lens **1351.** The retainer **1320** may be disposed to cover an edge of the incident surface of the first lens **1351.** The retainer **1320** may be in contact with a portion of the incident surface of the first lens **1351.**

A sealing member coupling groove **1322** to which a sealing member **1620** to be described later is coupled may be formed on an outer surface of the retainer **1320.** The sealing member coupling groove **1322** may have a groove shape in which a portion of the outer surface of the retainer **1320** is recessed inward than other regions.

The lens holder **1400** may be disposed inside the first body **1100.** The lens holder **1400** may be disposed outside the lens barrel **1310.** The lens holder **1400** may have a space formed therein to which the lens barrel **1310** is coupled. A thread or a screw groove may be formed on an inner surface of the lens holder **1400** facing an outer circumferential surface of the lens barrel **1310.**

A coupling portion **1420** may be formed on a lower surface of the lens holder **1400** being protruded downward than other regions. A lower surface of the coupling portion **1420** may be in contact with an upper surface of the printed circuit board **1500.** A screw hole to which a screw is coupled may be formed on a lower surface of the coupling portion **1420.** The lens holder **1400** may be screw-coupled to the printed circuit board **1500** through the screw.

The printed circuit board **1500** may be disposed at a lower portion of the lens module **1300.** The printed circuit board **1500** may be disposed inside the second body **1200.** The printed circuit board **1500** may be disposed at a lower portion of the lens holder **1400.** The printed circuit board **1500** may have a plate shape, and at least one component for driving the camera module may be disposed on upper and lower surfaces thereof. For example, an image sensor **1510** may be disposed on an upper surface of the printed circuit board **1500** facing the lens **1350.** The image sensor **1510** may be disposed to face the lens **1350** in an optical axis direction. The image sensor **1510** may be optically aligned with the lens **1350.**

A pin **1530** may be disposed on a lower surface of the printed circuit board **1500.** The pin **1530** may have a shape being protruded downward from a lower surface of the printed circuit board **1500.** At least a portion of the pin **1530** may be disposed inside the connector withdrawal part **1220.** The pin **1530** is coupled to an external terminal, and accordingly, power may be supplied to the heating member **1700.**

The connector **1520** may be disposed on a lower surface of the printed circuit board **1500.** The connector **1520** may be mounted on a lower surface of the printed circuit board **1500.** The connector **1520** may be coupled to one end of the heating member **1700.** The connector **1520** may be electrically connected to one end of the heating member **1700.** The printed circuit board **1500** may be electrically connected to the heating member **1700** through the connector **1520.** The connector **1520** may be a BTB connector or an FFC connector.

The printed circuit board **1500** includes a screw hole facing the screw hole of the lens holder **1400,** and may be screw-coupled to the lens holder **1400.**

The camera module may include sealing members **1610** and **1620.** The sealing members **1610** and **1620** may include a first sealing member **1610** being disposed between the first body **1100** and the second body **1200,** and a second sealing member **1620** being disposed between an outer surface of the retainer **1320** and an inner surface of the first body **1100.** A space inside the camera module may be sealed from an external region through the sealing members **1610** and **1620.** The sealing members **1610** and **1620** may have a closed loop-shaped cross section. For example, the second sealing member **1620** may be formed in a ring shape.

Hereinafter, a heat generation structure of a lens according to a second embodiment of the present invention will be described.

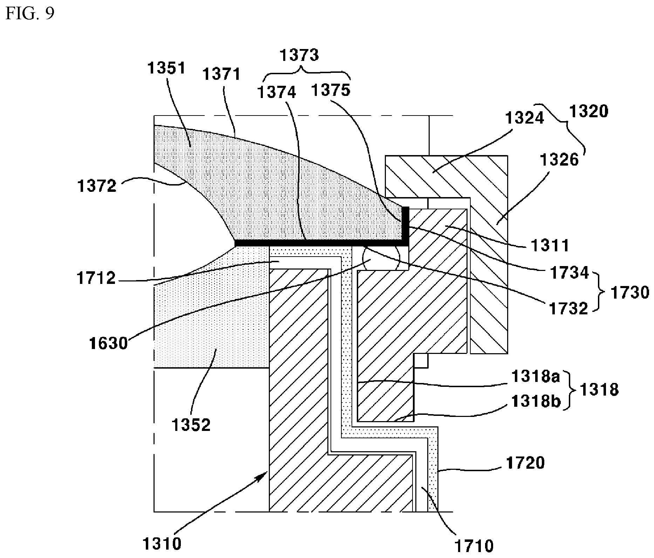

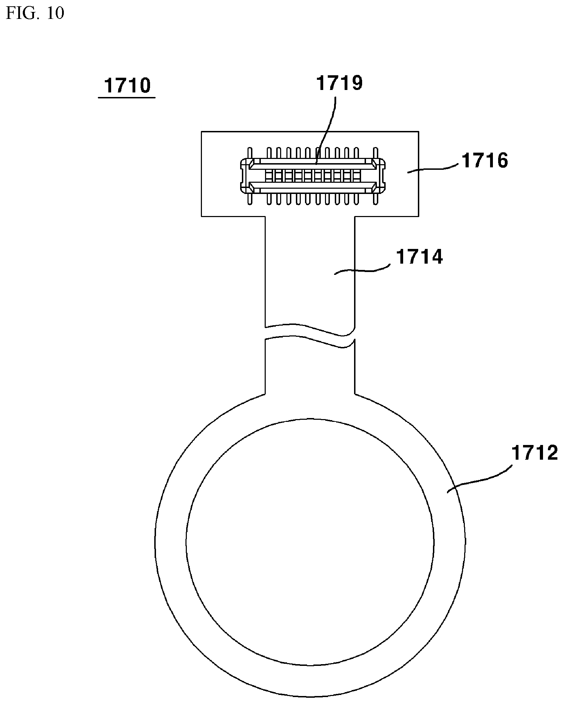

FIG. 9 is a cross-sectional view of a lens heat generation structure according to a second embodiment of the present invention; and FIG. 10 is a plan view of a substrate according to a second embodiment of the present invention.

Referring to FIGS. 9 to 10, a protruded portion **1311** being protruded upward and disposed to surround the first lens **1351** may be disposed on an upper surface of the lens barrel **1310.** The protruded portion **1311** may be formed as one body with the lens barrel **1310.**

The first lens **1351** may include an incident surface **1371,** an exit surface **1372,** which faces the incident surface **1371,** and a connection surface **1373** connecting the incident surface **1371** to the exit surface **1372.** Light incident into the first lens **1351** through the incident surface **1371** may be directed toward the image sensor **1510** through the exit surface **1372.**

The connection surface **1373** may include a first surface **1374** facing an upper surface of the second lens **1352** or the lens barrel **1310,** and a second surface **1375** facing an inner surface of the protruded portion **1311.** The first surface **1374** and the second surface **1375** may be perpendicular to each other. The first surface **1374** may be connected to the exit surface **1372,** and the second surface **1375** may be connected to the incident surface **1371.**

The retainer **1320** may include an incident surface **1371** and a first region **1324** being disposed on the protruded portion **1311** and a second region **1326** being disposed to surround an outer surface of the lens barrel **1310.** The first region **1324** and the second region 1326 may be perpendicular to each other.

The camera module may include a heating member **1700.** The heating member **1700** may be a positive temperature coefficient heater (PTC). The heating member **1700** may include a PTC ink **1730** applied to the surface of the first lens **1351,** and a substrate **1710** being electrically connected to the PTC ink **1730.**

The PTC ink **1730** may be applied to a surface of the first lens **1351.** The PTC ink **1730** may be applied to a lower surface of the first lens **1351.** The PTC ink **1730** may be applied to the connection surface **1373.** The PTC ink **1730** may be applied to the first surface **1374** and the second surface **1375,** respectively. The PTC ink **1730** may generate heat by providing power.

The PTC ink **1730** may have a black color. The PTC ink **1730** may be black. Thus, light may be prevented from being reflected from the surface of the lens **1350**

The PTC ink 1730 may be referred to as a heating unit.

One end of the substrate **1710** may be connected to the PTC ink **1730,** and the other end thereof may be connected to the printed circuit board **1500.** The substrate **1710** may be a flexible circuit board (FPCB). The substrate **1710** may include a region being bent at least once. A circuit pattern **1720** may be formed on a surface of the substrate **1710.** The circuit pattern **1720** may be disposed on a surface of the substrate **1710** facing the PTC ink **1730.** The circuit pattern **1720** may be a metal paste.

As illustrated in FIG. 10, the substrate **1710** may include an upper end portion **1712,** a lower end portion **1716,** and a connecting portion **1714.** The upper end portion **1712** has a ring-shaped cross section and may be connected to the PTC ink **1730.** The upper end portion **1712** may be in contact with a portion of the lower surface of the PTC ink **1730.** The lower end portion **1716** may be connected to the printed circuit board **1500.** The lower end portion **1716** may be coupled to the connector **1520.** The connecting portion **1714** is disposed to connect the upper end portion **1712** and the lower end portion **1716** and may have a region being bent at least once. At least a portion of the connecting portion **1714** may be disposed in the hole **1318** inside the lens barrel **1310** to be described later.

Meanwhile, the lens barrel **1310** may include a hole **1318** through which the substrate **1710** penetrates. The substrate **1710** may be disposed to penetrate the hole **1318.** The hole **1318** may include a plurality of regions perpendicular to one another. The hole **1318** may include a first hole **1318a** and a second hole **1318b.** The first hole **1318a** and the second hole **1318b** communicate with each other and may be vertically disposed.

A sealing member **1630** may be disposed between the first lens **1351** and an upper surface of the lens barrel **1310.** Through the sealing member **1630,** foreign substances may be prevented from being introduced between the lens barrel **1310** and the first lens **1351.**

According to the above structure, there is an advantage in that frost or ice formation generated on the surface of the lens may be quickly removed through heat generated from the heating member.

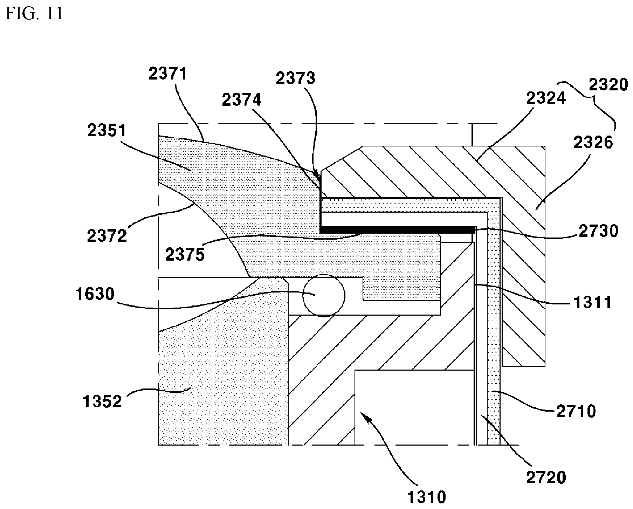

FIG. 11 is a cross-sectional view of a lens heat generation structure according to a third embodiment of the present invention.

In the present embodiment, other parts are the same as those of the second embodiment, but there is a difference according to the arrangement structure of the heating member. Therefore, hereinafter, only characteristic parts of the present embodiment will be described, and the description of the second embodiment will be referred to in the remaining parts.

Referring to FIG. 11, a protruded portion **1311** being protruded upward and disposed to surround the first lens **1351** may be disposed on an upper surface of the lens barrel **1310.** The truncated region **1311** may be formed as one body with the lens barrel **1310.**

The first lens **2351** may comprise an incident surface **2371,** an exit surface **2372** facing the incident surface **2371,** and a connection surface **2373** connecting the incident surface **2371** to the exit surface **2372.** The connection surface **2373** may be formed on a side surface of the first lens **2351.** The connection surface **2373** may be covered by a retainer **2320.**

The connection surface **2373** may include a first surface **2374** being disposed to face the retainer **2320** in a direction perpendicular to the optical axis direction, and a second surface **2375** being disposed to face the retainer **2320** in an optical axis direction. The first surface **2374** and the second surface **2375** may be perpendicular to each other. The first surface **2374** may be connected to the incident surface **2371.** The second surface **2375** may be disposed at an edge of the upper surface of the first lens **2351.**

The retainer **2320** may include a first region **2324** being disposed on the lens barrel **1310** and a second region **2326** being disposed to surround a side surface of the lens barrel **1310.** The first region **2324** and the second region **2326** may be perpendicular to each other. The first region **2324** may be disposed to be overlapped with the second surface **2375** in an optical axis direction. The first region **2324** may be in contact with the first surface **2374.**

The heating member may include a PTC ink **2730** being disposed on the second surface **2375,** and a substrate **2710** electrically connected to the PTC ink **2730.**

The PTC ink **2730** may be applied to the surface of the first lens **2351.** The PTC ink **2730** may be applied to an upper surface of the first lens **2351.** The PTC ink **2730** may be applied to the second surface **2375** of the connection surface **2373.** The PTC ink **2730** may generate heat by providing power.

The PTC ink **2730** may be referred to as a heating unit.

The substrate **2710** may have one end connected to the PTC ink **2730** and the other end connected to the printed circuit board **1500.** The substrate **2710** may be a flexible circuit board (FPCB). The substrate **2710** may include a region bent at least once. A circuit pattern **2720** may be formed on a surface of the substrate **2710.** The circuit pattern **2720** may be disposed on a surface of the substrate **2710** facing the PTC ink **2730.**

At least a portion of the substrate **2710** may be disposed between the lens barrel **1310** and the retainer **2320.** A separation portion may be formed between an outer surface of the lens barrel **1310** and an inner surface of the retainer **2320** so that the substrate **2710** penetrates therethrough. The separation portion may have a hole shape.

A sealing member **1630** may be disposed between the lower surface of the first lens **2351,** that is, the exit surface of the first lens **2351** and the upper surface of the lens barrel **1310.** Foreign substances may be prevented from being introduced between the lens barrel **1310** and the first lens **2351** through the sealing member **1630.** Meanwhile, in the present embodiment, since the sealing member **1630** may be supported by the outer surface of the second lens **1352,** there is an advantage in that a space inside the module may be secured more widely.

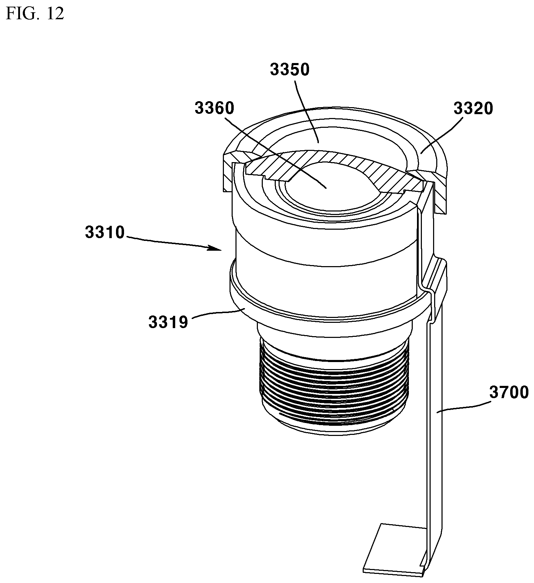

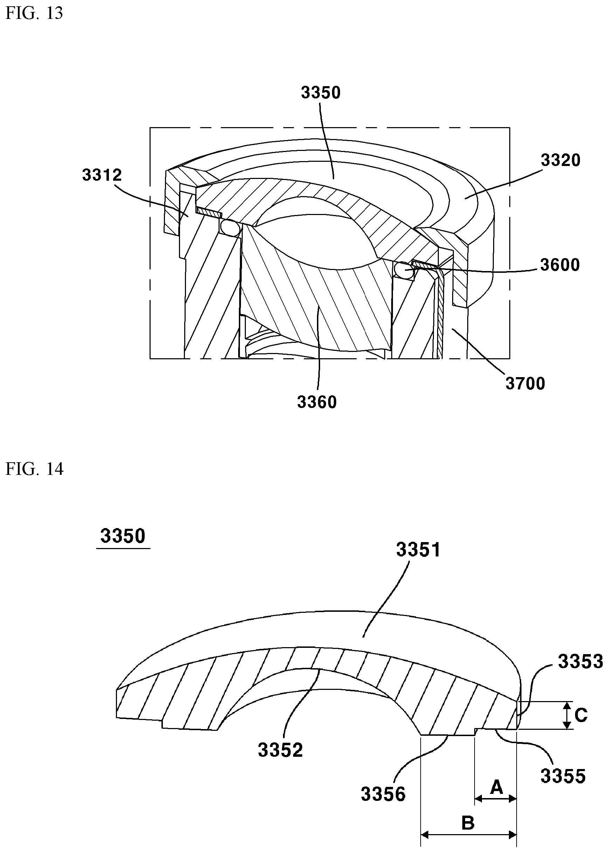

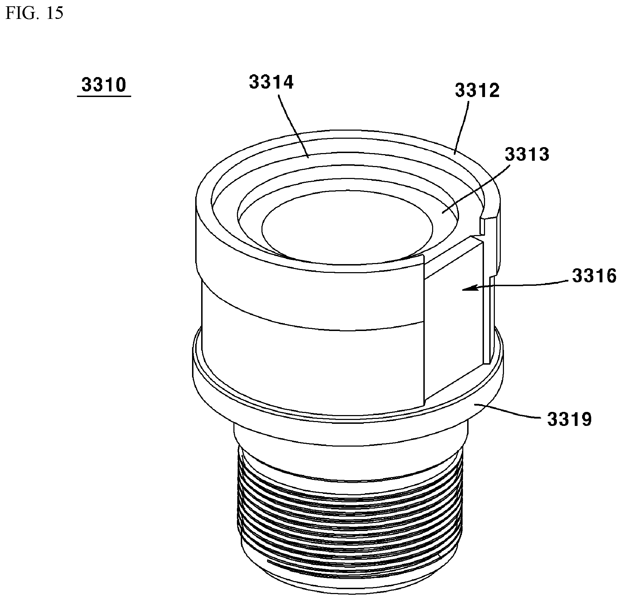

FIG. 12 is a perspective view of a camera module according to a fourth embodiment of the present invention; FIG. 13 is a cross-sectional view of a camera module according to a fourth embodiment of the present invention; FIG. 14 is a cross-sectional view of a first lens according to a fourth embodiment of the present invention; and FIG. 15 is a perspective view of a lens barrel according to a fourth embodiment of the present invention.

In the present embodiment, other parts are the same as those of the second embodiment, but there is a difference according to the arrangement structure of the heating member. Therefore, hereinafter, only characteristic parts of the present embodiment will be described, and the description of the above-described embodiment will be referred to in the remaining parts.

Referring to FIGS. 12 to 15, the camera module according to the present embodiment may include a lens barrel **3310,** a lens, a retainer **3320,** and a heating member **3700.**

The lens barrel **3310** may include a space in which the lens is accommodated. A protruded portion **3312** protruding upward may be formed on an upper surface of the lens barrel **3310.** The protruded portion **3312** may support the side surfaces of the first lens **3350.**

A flange **3319** may be formed on a side surface of the lens barrel **3310.** With respect to the flange **3319,** the lens barrel **3310** may be divided into a first region and a second region. The first region may be disposed on an upper portion of the flange **3319,** and the second region may be disposed on a lower portion of the flange **3319.** A cross-sectional area of the first region may be larger than a cross-sectional area of the second region. The second region may be screw-coupled to a lens holder **1400** (see FIG. 8).

A first surface **3314** and a second surface **3313** may be formed on an upper surface of the lens barrel **3310.** The first surface **3314** and the second surface **3313** may be stepped in an optical axis direction. The first surface **3314** may be disposed outside the second surface **3313.** The first surface **3314** may be disposed at an upper side of the second surface **3313.** An upper surface of the protruded portion **3312** may be disposed at an upper side of the first surface **3314.**

An avoidance portion **3316** may be formed on a side surface of the lens barrel **3310.** The avoidance portion **3316** may have a groove shape being recessed inwardly than other regions. The avoidance portion **3316** may be formed on a side surface of the first region. An upper surface of the avoidance portion **3316** may be disposed at an upper side of the first surface **3314,** and may be disposed at a lower side of the upper surface of the truncated port **3312.**

A lens may be disposed in the lens barrel **3310.** The lens may include a first lens **3350** and a second lens **3360.** The first lens **3350** and the second lens **3360** may be disposed vertically with respect to an optical axis direction. The first lens **3350** may be an outermost lens. An incident surface **3351** of the first lens **3350** may be disposed at an upper side of the upper surface of the lens barrel **3310.**

The first lens **3350** may include an incident surface **3351** through which light is incident, an exit surface **3352** through which light is emitted, and a plurality of connection surfaces **3353** and **3355.** The plurality of connection surfaces **3353** and **3355** may connect the incident surface **3351** to the exit surface **3352,** and may include a first connection surface **3353** and a second connection surface **3355.** The first connection surface **3353** may form a side surface of the first lens **3350.** The second connection surface **3355** may form a lower surface of the first lens **3350.** The second connection surface **3355** may include a protruding area **3356** being protruded downward. The protruding area **3356** may be connected to the exit surface **3352.**

When the first lens **3350** is viewed from below, the second connection surface **3355** except for the protruding area **3356** may have a groove shape. Accordingly, the lower surface of the protruding area **3356** may be referred to as a second connection surface, and the second connection surface **3355** may be referred to as a groove, with respect to the lower surface of the first lens **3350.**

With respect to a direction perpendicular to the optical axis direction, the length **A** of the second connection surface **3355** excluding the protruding area **3356** may be less than 2/3 of the length **B** of the protruding area **3356.**

The length **C** of the first connection surface **3353** may be greater than or equal to 0.5 mm with respect to the optical axis direction.

The retainer **3320** may be disposed on the lens barrel **3310** and may support the first lens **3350.** The retainer **3320** may be disposed to surround an outer surface of the lens barrel **3310.** A hole for exposing the first lens **3350** may be formed at a center of the retainer **3320.**

The heating member **3700** may have one end disposed on a lower surface of the first lens **3350,** and the other end connected to the printed circuit board. The heating member **3700** may include a heating part, and the heating part may be in contact with the second connection surface **3355** except for the protruding region **3356.** The heating part may have a lower surface supported by the first surface **3314** of the lens barrel **3310.**

At least a portion of the connecting part of the heating member **3700** may be disposed in the avoidance portion **3316.**

The camera module includes a sealing member **3600,** and the sealing member **3600** may be disposed between a lower surface of the protruding area **3356** and the second surface **3313.** The sealing member **3600** may be supported by a side surface of the second lens **3360.**

In the above description, it is described that all the components constituting the embodiments of the present invention are combined or operated in one, but the present invention is not necessarily limited to these embodiments. In other words, inside the scope of the present invention, all of the components may be selectively operated in combination with one or more. In addition, the terms "comprise", "include" or "having" described above mean that the corresponding component may be inherent unless specifically stated otherwise, and thus it should be construed that it does not exclude other components, but further include other components instead. All terms, including technical and scientific terms, have the same meaning as commonly understood by one of ordinary skill in the art unless otherwise defined. Terms used generally, such as terms defined in a dictionary, should be interpreted to coincide with the contextual meaning of the related art, and shall not be interpreted in an ideal or excessively formal sense unless explicitly defined in the present invention.

The above description is merely illustrative of the technical idea of the present invention, and those skilled in the art to which the present invention pertains may make various modifications and changes without departing from the essential characteristics of the present invention. Therefore, the embodiments disclosed in the present invention are not intended to limit the technical idea of the present invention but to describe the present invention, and the scope of the technical idea of the present invention is not limited by these embodiments. The protection scope of the present invention should be interpreted by the following claims, and all technical ideas inside the equivalent scope should be interpreted as being included in the scope of the present invention.

## Claims

1. A camera module comprising:
a lens barrel;
a lens being disposed inside the lens barrel;
a heating member including a heating unit disposed on a surface of the lens; and
a sensor member including a sensor unit disposed on a lower surface of the heating unit,
wherein the lens includes a groove to which the heating unit and the sensor unit are coupled.

2. The camera module according to claim 1,
wherein the heating unit is a positive temperature coefficient (PTC) ink applied to a surface of the lens.

3. The camera module according to claim 1,
wherein the heating unit has a black color.

4. The camera module according to claim 1,
wherein each of the heating unit and the sensor unit has a ring-shaped cross-section.

5. The camera module according to claim 4,
wherein a temperature sensor is disposed on a lower surface of the sensor unit.

6. The camera module according to claim 1,
wherein the heating unit and the sensor unit are interposed between an upper surface of the lens barrel and a lower surface of the lens.

7. The camera module according to claim 1,
wherein a rib protruded downward is disposed on a lower surface of the sensor unit.

8. The camera module according to claim 1,
wherein the heating member includes a first connecting portion having one end connected to the heating unit and other end connected to a printed circuit board,
wherein the sensor member includes a second connecting portion having one end connected to the sensor unit and other end connected to the printed circuit board, and
wherein the first connecting portion and the second connecting portion are disposed to be overlapped with at least a portion thereof.

9. The camera module according to claim 8,
wherein the first connecting portion and the second connecting portion are flexible printed circuit boards (FPCBs).

10. A camera module comprising:
a first body;
a lens module disposed inside the first body, the lens module including a lens barrel and a lens disposed inside the lens barrel;
a printed circuit board disposed inside the first body; and
a heating member providing heat to the lens,
wherein the heating member includes a heating unit disposed on a surface of the lens, and a substrate electrically connecting the heating unit and the printed circuit board.
